**Europäisches Patentamt**

**European Patent Office**

**Office européen des brevets**

(19)

(11) Veröffentlichungsnummer : **0 177 479**
**B1**

(12)

# EUROPÄISCHE PATENTSCHRIFT

(45) Veröffentlichungstag der Patentschrift :
20.01.88

(21) Anmeldenummer : 85890183.8

(22) Anmeldetag : 16.08.85

(51) Int. Cl.⁴ : **F 01 N   3/28**

(54) **Katalytische Abgasreinigungseinrichtung sowie Verfahren zu ihrer Herstellung.**

(30) Priorität : 17.08.84 DE 3430398

(43) Veröffentlichungstag der Anmeldung :
09.04.86 Patentblatt 86/15

(45) Bekanntmachung des Hinweises auf die Patenterteilung : 20.01.88 Patentblatt 88/03

(84) Benannte Vertragsstaaten :
AT CH FR GB IT LI SE

(56) Entgegenhaltungen :
DE-A- 2 913 732
DE-A- 3 013 691
US-A- 3 972 687
US-A- 4 160 010

(73) Patentinhaber : **VOEST-ALPINE St. Aegyd Aktiengesellschaft**

**A-3193 St. Aegyd am Neuwalde (AT)**

(72) Erfinder : **Lampel, Werner**
**Mitterbach 16**
**A-3193 St. Aegyd a.N. (AT)**
Erfinder : **Dorner, Johann**
**Alte Landstrasse 2**
**A-3193 St. Aegyd a.N. (AT)**

(74) Vertreter : **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

## Beschreibung

Die Erfindung bezieht sich auf eine katalytische Abgasreinigungseinrichtung mit einer in einem Gehäuse angeordneten metallischen Trägermatrix für den Katalysator und je einem Anschluß für die Zuleitung des zu reinigenden Abgases und die Ableitung des gereinigten Abgases, wobei die metallische Trägermatrix über ihre gesamte Länge von einem metallischen Hüllrohr umgeben ist, dessen der Zuleitung zugewandtes Ende über seinen gesamten Umfang gasdicht mit dem Gehause verschweißt ist, sowie auf ein Verfahren zur Herstellung einer derartigen Abgasreinigungseinrichtung.

Insbesondere zur Verwendung in Auspuffanlagen von Kraftfahrzeugen ist es bereits bekannt, katalytische Abgasreinigungseinrichtungen in Auspufftöpfen anzuordnen. Als Trägermatrix für den Katalysator wird hiebei ein entsprechend poröser Körper eingesetzt, welcher aus gewellten und gerollten Blechen besteht. Bei entsprechender Wahl der Wanddicke der Metallzellen in Größenordnungen von einigen hundertstel mm ergeben sich bei kleinen Abmessungen hohe Zellenzahlen je Querschnittseinheit bei geringem Gewicht. Derartige metallische Trägermatrizen eignen sich bevorzugt für den raumsparenden Einbau in Auspuffsystemen, wobei bei geringem Bauvolumen ein relativ geringer Abgasgegendruck für den Motor bei gleichzeitig hoher katalytischer Aktivität erzielt wird. Trägermatrizen können hiebei mit kreisrundem Querschnitt oder mit jedem beliebigen ovalen Querschnitt hergestellt sein und werden nach dem Beschichten mit katalytisch aktivem Material in eine Verpackung bzw. ein Gehäuse eingebaut. Beim Einbau in ein derartiges Gehäuse muß vor allen Dingen dafür Sorge getragen werden, daß das zugeleitete Abgas tatsächlich lediglich die mit katalytischem Material beschichteten Zellen der Trägermatrix durchströmt und nicht außen an einer derartigen Trägermatrix vorbeiströmen kann. Bereits geringe Undichtheiten führen dazu, daß der größte Teil des Abgases den Weg des geringeren Widerstandes durch die undichte Stelle nimmt, wodurch die Abgasreinigung nicht mehr erfolgt.

Bisher wurde die Anordnung in einem Gehäuse so vorgenommen, daß unter Zwischenschaltung elastischer Zwischenlagen ein Festspannen in axialer Richtung im Inneren des Gehäuses erfolgte. Die Trägermatrix muß im Betrieb Temperaturdifferenzen von über 1 000 °C ohne Beschädigung überstehen und es muß daher vor allen Dingen in axialer Richtung der Kanäle der Trägermatrix mit einer beträchtlichen Längenausdehnung bzw. Zusammenziehung aufgrund von Temperaturdifferenzen gerechnet werden. Das Festspannen mittels elastischer Zwischenlagen ist aus diesem Grunde immer mit dem Problem behaftet, daß die Dichtheit nicht vollständig garantiert ist. Nach mehrmaliger Verformung der elastischen Dichtungszwischenlagen kann im Bereich dieser Dichtungszwischenlagen eine Leckstelle auftreten und es genügen bereits geringe freie Durchströmquerschnitte, um zu verhindern, daß das Gas den Weg durch die Zellen der Trägermatrix nimmt und außen an der Trägermatrix zwischen dem Gehäuse und der Trägermatrix vorbeiströmt (Bypass-Effekt).

Aus der DE-A-2 815 317 ist eine Einrichtung der eingangs genannten Art bekanntgeworden, bei welcher ein quaderförmiger Trägerblock längs seiner Stirnkanten oder in einem mittigen Bereich mit einem Gehäuse verschweißt ist.

Die Erfindung zielt nun darauf ab, eine wesentliche Vereinfachung der Herstellung und des Zusammenbaues der Abgasreinigungseinrichtung zu schaffen, bei welcher mit wenigen Verfahrensschritten bei der Herstellung ein dichtender Anschluß des Hüllrohres an das Gehäuse erfolgt und diese dichtende Verbindung auch bei unterschiedlichen Ausdehnungen des Hüllrohres relativ zum Gehäuse in keiner Weise mechanisch überbeansprucht wird. Zur Lösung dieser Aufgabe besteht die Erfindung im wesentlichen darin, daß das Hüllrohr an seinem mit dem Gehäuse zu verschweißenden Stirnende über die Stirnfläche der Trägermatrix in axialer Richtung vorragt, daß das Hüllrohr, der Einlaufteil für das zu reinigende Abgas und der Mantel des Gehäuses über eine gemeinsame in Umfangsrichtung verlaufende Schweißnaht miteinander verbunden sind, und daß das der Zuleitung abgewendete Ende des Hüllrohres schwimmend im Gehäuse gelagert ist. Dadurch, daß das Hüllrohr der Trägermatrix an ihrer der Zuleitung des zu reinigenden Abgases zugewandten Stirnseite über ihren ganzen Umfang starr und gasdicht am Gehäuse festgelegt ist, können elastische Dichtungseinlagen mit den mit derartigen Einlagen verbundenen Dichtungsproblemen an dieser Stelle entfallen. Die thermische Ausdehnung kann an der dieser Stirnseite gegenüberliegenden Stirnseite der Trägermatrix berücksichtigt werden, wobei an dieser Stirnseite nur mehr das gereinigte Abgas austritt. Es genügt hiefür, die der Zuleitung abgewandte Stirnseite schwimmend im Gehäuse zu lagern, um der thermischen Ausdehnung Rechnung zu tragen, wobei es an dieser Stelle unerheblich ist, ob hier ein dichtender Abschluß vorliegt oder nicht. Dadurch, daß das Hüllrohr über den gesamten Umfang der der Zuleitung zugewandten Stirnseite mit dem Gehäuse verschweißt ist, wird die Trägermatrix selbst nicht beeinträchtigt und der Schweißvorgang kann ohne nachteilige Veränderungen der Trägermatrix vorgenommen werden. Die gemeinsame Schweißnaht ermöglicht einen raschen und von Schweißautomaten mit hoher Präzision durchführbaren gasdichten Zusammenbau an der Einlaufseite, wobei gleichzeitig im gleichen Arbeitsgang Einlaufteil und Gehäuse miteinander verbunden werden. Die Ausbildung zeichnet sich darüberhinaus strömungstechnisch dadurch aus, daß die gesamte freie Querschnittsfläche des Katalysatorträgers gleichmäßig von zu reinigenden Abgasen durchströmt werden kann, sodaß mit geringen Querschnittsabmessungen für den Katalysatorträger das Auslangen gefunden werden kann.

Um sicherzustellen, daß beim Schweißvorgang keine Beschädigung der Trägermatrix erfolgt, ist die Ausbildung hiebei so getroffen, daß das Hüllrohr an seinem mit dem Gehäuse zu verschweißenden Stirnende über die Stirnfläche der Trägermatrix in axialer Richtung, vorzugsweise über eine axiale Länge von wenigstens 15 mm, vorragt.

Um eine relative Ausdehnung des Hüllrohres mit der Trägermatrix in radialer Richtung zuzulassen, ohne daß dies zu einer Überbeanspruchung des Gehäuses bzw. der Verpackung führt, und um das Gehäuse oder die Verpackung nur in geringerem Maße der hohen Temperaturbelastung zu unterwerfen, ist es vorteilhaft, das Hüllrohr der Trägermatrix in an sich bekannter Weise unter Zwischenschaltung einer isolierenden Zwischenschicht, insbesondere einem Faservlies, Keramikfaservlies oder Steinwolle, im Gehäuse zu lagern.

Die erfindungsgemäße Ausbildung ermöglicht den besonders einfachen Aufbau der Abgasreinigungsvorrichtung aus nur wenigen miteinander zu verbindenden Teilen, wobei gegenüber den bekannten Ausbildungen eine beträchtliche Verringerung des Montageaufwandes erzielt wird. In besonders vorteilhafter Weise gilt dies für eine Ausbildung, bei welcher das Gehäuse aus zwei in einer die Längsachse des Gehäuses enthaltenden Ebene oder einer zu dieser Längsachse parallelen Ebene geteilten Halbschalen sowie einem im wesentlichen kegelförmigen Einlaufteil mit dem Anschluß für die Zuleitung zusammengesetzt ist. Die in einer zur Längsachse parallelen Ebene geteilten Halbschalen können hiebei in radialer Richtung vorspringende Flansche aufweisen, welche in einfacher und konventioneller Weise durch Verschweißung miteinander verbunden werden können. In vorteilhafter Weise ist diese Ausbildung so weitergebildet, daß der kegelförmige Einlaufteil innerhalb der Halbschalen des Gehäuses endet und die in Umfangsrichtung verlaufende Schweißnaht zur Verbindung des Hüllrohres mit den Halbschalen einwärts übergreift.

Zur Verbesserung der Verteilung des zu reinigenden Abgases über den gesamten zur Verfügung stehenden Querschnitt der Trägermatrix ist in vorteilhafter Weise im Inneren des Einlaufteiles ein perforierter Leitkegel mit zum Einlaufteil entgegengesetzt verlaufender Konizität angeordnet.

Ein besonders einfaches Verfahren zur Herstellung einer derartigen Abgasreinigungseinrichtung ist dadurch gekennzeichnet, daß eine metallische Trägermatrix mit dem Hüllrohr mit einer isolierenden Umhüllung in eine Gehäusehalbschale eingelegt, hierauf eine zweite Halbschale aufgesetzt und längs der Trennungslinie der Halbschalen mit der ersten Halbschale verschweißt wird, und daß anschließend vor dem oder gleichzeitig mit dem Ansetzen eines Einlaufteiles mit dem Anschluß für die Zuleitung des Abgases eine Umfangsschweißung zur Verbindung der Stirnseite des Hüllrohres der metallischen Trägermatrix mit den verschweißten Halbschalen und gegebenenfalls mit dem Einlaufteil vorgenommen wird. Diese besonders vorteilhafte und kostengünstige Herstellungsweise ergibt sich nicht zuletzt aus dem einfachen, nur wenige Teile aufweisenden Aufbau des Gehäuses, wobei als Schweißverfahren eine WIG-Schweißung, d. h. somit eine Inertgasschweißung mit einer Wolframelektrode besonders bevorzugt ist. Ebenso kann auch die Verschweißung des Einlaufteiles mit den Halbschalen bzw. der Innenseite eines nach außen über die Trägermatrix vorspringenden Ringbordes des Hüllrohres mit einer derartigen WIG-Schweißung vorgenommen werden. Bei stumpfer Verschweißung der Stirnseite der Halbschalen, des Hüllrohres und des ringförmigen Randes des Einlaufteiles wird besonders bevorzugt eine Magnetarc-Schweißung vorgenommen, wobei die gebildete in Umfangsrichtung verlaufende Schweißnaht ein hohes Maß an Dichtheit sicherstellt.

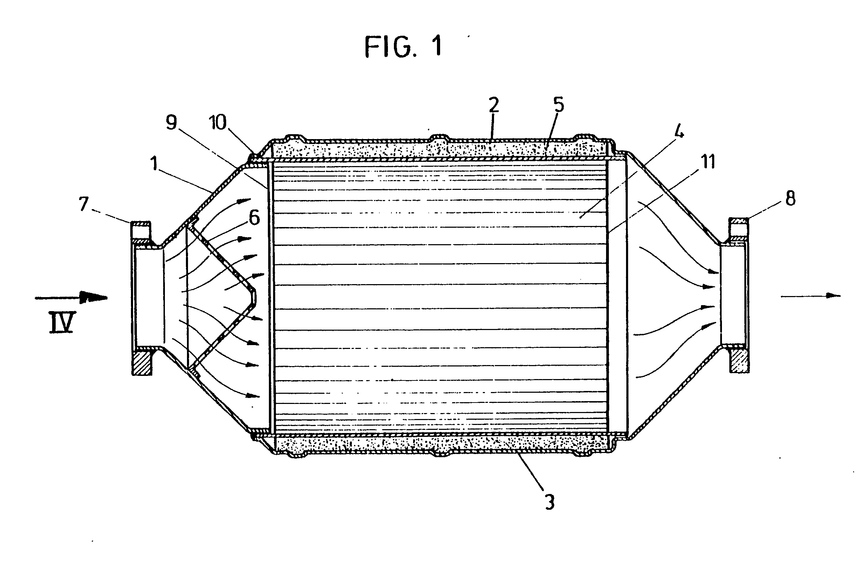

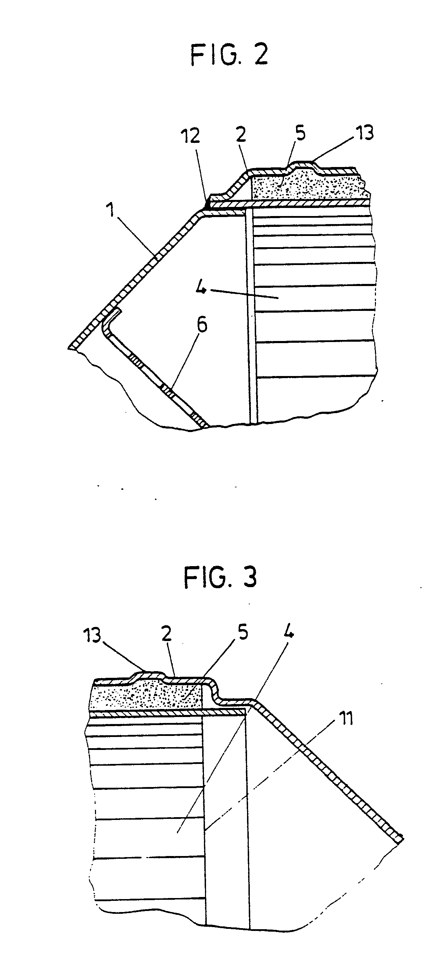

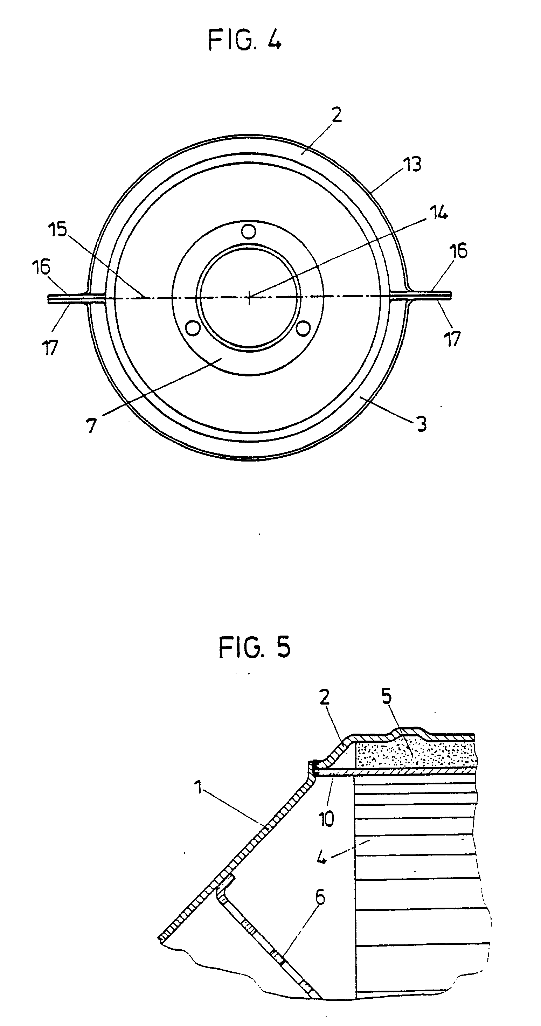

Die Erfindung wird nachfolgend an Hand von in der Zeichnung dargestellten Ausführungsbeispielen näher erläutert. In dieser zeigen Fig. 1 einen Axialschnitt durch eine katalytische Abgasreinigungseinrichtung zur Verwendung in Kraftfahrzeugen, die Fig. 2 und 3 vergrößerte Darstellungen der Anschlußstellen der Trägermatrix an das Gehäuse, wobei Fig. 2 den einlaufseitigen Anschluß und Fig. 3 den auslaßseitigen Anschluß darstellt, Fig. 4 eine Ansicht in Richtung des Pfeiles IV der Fig. 1 und Fig. 5 eine abgewandelte Ausbildung der Schweißverbindung zwischen dem Einlaufteil und dem Hüllrohr der Trägermatrix bzw. dem Gehäuse entsprechend der Ansicht nach Fig. 2.

In Fig. 1 sind ein tiefgezogener Einlaufteil 1 sowie zwei Halbschalen 2 und 3 dargestellt, welche gemeinsam das Gehäuse für eine mit Edelmetall beschichtete Metallträgermatrix 4 darstellen. Die Metallträgermatrix ist innerhalb des zweischaligen Gehäuses unter Zwischenschaltung einer Isoliermatte 5 aus Keramikfaservlies angeordnet.

Im Inneren des Einlaufteiles ist ein perforierter Leitkegel 6 angeordnet, welcher für die Verteilung des über den Anschluß 7 zugeführten zu reinigenden Abgases Sorge trägt. Der Anschluß für die Ableitung des gereinigten Gases ist mit 8 bezeichnet.

Der Einlaufteil 1 weist bei dieser Ausführung einen einwärts ragenden Bord auf, welcher in das Innere eines die Stirnfläche 9 der Trägermatrix 4 um wenigstens 15 mm überragenden Hüllrohres 10 hineingesteckt ist. Die Stirnfläche 9 bzw. der nach außen vorspringende Ringbord des Hüllrohres 10 ist mit den Halbschalen 2 und 3 in Umfangsrichtung verschweißt. Ebenso ist der Einlaufteil 1 an dieser Stelle mit dem Hüllrohr 10 der Trägermatrix verschweißt. An der dem Auslauf zugewendeten Stirnseite 11 ist das Hüllrohr der Trägermatrix schwimmend in den Halbschalen 2 und 3 gelagert.

In Fig. 2 ist die an der Einlaufseite in Umfangsrichtung verlaufende Schweißnaht vergrößert dargestellt und mit 12 bezeichnet. Analog ergibt sich aus Fig. 3 in deutlicher Vergrößerung die schwimmende Lagerung des dem Einlaufteil gegenüberliegenden Endes des Hüllrohres 10 der Trägermatrix 4.

Zur Verbesserung des Haltes und zur Erhöhung der Stabilität sind in den Halbschalen in Umfangsrichtung verlaufende Rippen bzw. Soffiten 13 vorgesehen.

Aus Fig. 4 ist die Verbindung der beiden Halbschalen 2 und 3 in einer die Längsachse 14 enthaltenden Teilungsebene 15 ersichtlich. Die Halbschalen 2 und 3 weisen hiefür auswärts gerichtete Flansche 16 und 17 auf.

Die Ausbildung nach Fig. 5 unterscheidet sich von der Ausbildung nach Fig. 2 lediglich durch die stumpfe Verschweißung des Einlaufteiles mit den Stirnflächen der Halbschalen 2, 3 und der Stirnfläche des Hüllrohres 10 der Trägermatrix 4. Für die stumpfe Verschweißung wird hier ein Magnetarc-Schweißverfahren bevorzugt.

Sämtliche Blechteile, insbesondere der Einlaufteil 1, die Halbschalen 2, 3 und der Leitkegel 6 bestehen aus rostfreiem Blech mit der Werkstoff-Nr. 14512. Es handelt sich hiebei um den für derartige Zwecke üblicherweise verwendeten x 5 Cr Ti 12-Stahl, wie er für Schalldämpfer von Kraftfahrzeugen verwendet wird. Dieser Stahl weist eine durchschnittliche Zusammensetzung von C = 0,8 Si = 1,0 Mn = 1,0 P = . 045 S = . 030 Cr 11,0/12,5 Mo =. 5 Ni =. 5 Ti = 6 x % C Rest Eisen und übliche Verunreinigungen auf. Das Hüllrohr 10 kann aus dem gleichen Material bestehen, wobei insbesondere auf gute Schweißbarkeit geachtet werden kann.

Die erfindungsgemäße Anordnung der Trägermatrix im Gehäuse erlaubt sowohl die Ausdehnung in axialer als auch in radialer Richtung. Die in radialer Richtung vorgesehene Wärmeisolierung bringt ein besseres Anspringverhalten des Katalysators mit sich und verhindert eine übermäßige Erwärmung des Außengehäuses bzw. der Halbschalen 2 und 3. Die Ausführung kann ohne weiteres von der kreisrunden Querschnittsform abweichen und es sind ohne weiteres übliche ovale Querschnittsformen ohne Änderung des baulichen Aufwandes und der Konstruktion verwendbar.

**Patentansprüche**

1. Katalytische Abgasreinigungseinrichtung mit einer in einem Gehäuse angeordneten metallischen Trägermatrix für den Katalysator und je einem Anschluß für die Zuleitung des zu reinigenden Abgases und die Ableitung des gereinigten Abgases, wobei die metallische Trägermatrix über ihre gesamte Länge von einem metallischen Hüllrohr umgeben ist, dessen der Zuleitung zugewandtes Ende über seinen gesamten Umfang gasdicht mit dem Gehäuse verschweißt ist, dadurch gekennzeichnet, daß das Hüllrohr (10) an seinem mit dem Gehäuse (1, 2, 3) zu verschweißenden Stirnende über die Stirnfläche (9) der Trägermatrix (4) in axialer Richtung vorragt, daß das Hüllrohr (10), der Einlaufteil (1) für das zu reinigende Abgas und der Mantel des Gehäuses (2, 3) über eine gemeinsame in Umfangsrichtung verlaufende Schweißnaht (12) miteinander verbunden sind, und daß das der Zuleitung abgewendete Ende des Hüllrohres (10) schwimmend im Gehäuse (2, 3) gelagert ist.

2. Einrichtung nach Anspruch 1, dadurch gekennzeichnet, daß das Hüllrohr (10) an seinem mit dem Gehäuse (1, 2, 3) zu verschweißenden Stirnende über die Stirnfläche (9) der Trägermatrix (4) in axialer Richtung über eine axiale Länge von wenigstens 15 mm vorragt.

3. Einrichtung nach Anspruch 1 oder 2, bei welcher das Gehäuse aus zwei in einer die Längsachse des Gehäuses enthaltenden Ebene oder einer zu dieser Längsachse parallelen Ebene geteilten Halbschalen (2, 3) sowie einem im wesentlichen kegelförmigen Einlaufteil (1) mit dem Anschluß (7) für die Zuleitung zusammengesetzt ist, dadurch gekennzeichnet, daß der kegelförmige Einlaufteil (1) innerhalb der Halbschalen (2, 3) des Gehäuses endet und die in Umfangsrichtung verlaufende Schweißnaht (12) zur Verbindung des Hüllrohres (10) mit den Halbschalen (2, 3) einwärts übergreift.

4. Einrichtung nach Anspruch 1, 2 oder 3, dadurch gekennzeichnet, daß im Inneren des Einlaufteiles (1) ein perforierter Leitkegel (6) mit zum Einlaufteil (1) entgegengesetzt verlaufender Konizität angeordnet ist.

5. Verfahren zur Herstellung einer Abgasreinigungseinrichtung nach einem der Ansprüche 1 bis 4, dadurch gekennzeichnet, daß eine metallische Trägermatrix (4) mit dem Hüllrohr (10) mit einer isolierenden Umhüllung (5) in eine Gehäusehalbschale (2, 3) eingelegt, hierauf eine zweite Halbschale (3, 2) aufgesetzt und längs der Trennungslinie der Halbschalen (2, 3) mit der ersten Halbschale verschweißt wird, und daß anschließend vor dem oder gleichzeitig mit dem Ansetzen eines Einlaufteiles (1) mit dem Anschluß für die Zuleitung des Abgases eine Umfangsschweißung zur Verbindung der Stirnseite des Hüllrohres (10) der metallischen Trägermatrix (4) mit den verschweißten Halbschalen (2, 3) und gegebenenfalls mit dem Einlaufteil (1) vorgenommen wird.

**Claims**

1. Catalytic exhaust gas purification device, comprising a metallic support matrix for the catalyst mounted in a housing and one fitting each for the supply pipe for the exhaust gas to be purified and for the discharge pipe for the purified exhaust gas, the metallic support metrix over its entire length being surrounded by a metal casing tube whose end facing the supply pipe is welded to the housing in a gas-tight manner along its entire circumference, characterised in that the casing tube (10) at its head end to be welded to the housing (1, 2, 3) protrudes axially over the head face (9) of the support matrix (4), that the casing tube (10), the intake portion (1) for the exhaust gas to be purified and the mantle of the housing (2, 3) are connected with each other by a common weld (12) directed circumferentially, and that the end of the casing tube (10) facing away from the supply pipe is float-mounted in the housing (2, 3).

2. Device as claimed in claim 1, characterised in that the casing tube (10) at its head end to be welded to the housing (1, 2, 3) protrudes axially over the head face (9) of the support matrix (4) by an axial length of at least 15 mm.

3. Device as claimed in claim 1 or 2, in which the housing is made up of two half-shells (2, 3) being split along a plane containing the housing axis or being parallel to said axis, and an essentially conical intake portion (1) with the fitting (7) for the supply pipe, characterised in that the conical intake portion (1) terminates within the half-shells (2, 3) of the housing and overlaps inwardly the circumferential weld (12) connecting the casing tube (10) with the half-shells (2, 3).

4. Device as claimed in claim 1, 2 or 3, characterised in that within the intake portion (1) there is mounted a perforate distributor cone (6) with opposed taper in relation to the intake portion (1).

5. A method of making an exhaust gas purification device as claimed in any one of claims 1 to 4, characterised in that a metallic support matrix (4) with the casing tube (10) and an insulating cover (5) are laid into one half-shell (2, 3) of the housing, that then a second half-shell (3, 2) is stacked up and welded to the first half-shell (2, 3) along the parting line, and that thereupon prior to, or simultaneously with, joining an intake portion (1) with the fitting for the supply of exhaust gas a circumferential welding is carried out to connect the face end of the casing tube (10) of the metallic support matrix (4) with the welded half-shells (2, 3) and optionally with the intake portion (1).

**Revendications**

1. Dispositif d'épuration catalytique de gaz d'échappement comportant une matrice métallique support de catalyseur disposée dans un carter et, respectivement, un raccord pour le conduit d'entrée du gaz d'échappement à épurer et pour le conduit de sortie du gaz d'échappement épuré, la matrice métallique support étant entourée sur toute sa longueur par un tube-enveloppe métallique dont l'extrémité tournée vers le conduit d'entrée est soudée sur toute sa périphérie, de façon étanche au gaz, avec le carter, caractérisé en ce que le tube-enveloppe (10) dépasse, à son extrémité frontale à souder avec le carter (1, 2, 3), axialement de la surface frontale (9) de la matrice support (4) ; en ce que le tube-enveloppe (10), la partie d'entrée (1) du gaz d'échappement à épurer et le bord du carter (2, 3) sont reliés entre eux par l'intermédiaire d'un cordon de soudure (12) commun s'étendant dans la direction périphérique ; et en ce que l'extrémité du tube-enveloppe (10) opposée au conduit d'entrée est montée de façon flottante dans le carter (2, 3).

2. Dispositif selon la revendication 1, caractérisé en ce que le tube-enveloppe (10) dépasse, à son extrémité frontale à souder avec le carter (1, 2, 3), axialement de la surface frontale (9) de la matrice support (4), sur une longueur axiale d'au moins 15 mm.

3. Dispositif selon la revendication 1 ou 2, dans lequel le carter est composé de deux demi-coquilles (2, 3) divisées dans un plan contenant l'axe longitudinal du carter ou bien un plan parallèle à cet axe longitudinal, ainsi que d'une partie d'entrée (1) de forme sensiblement conique et comportant le raccord (7) pour le conduit d'entrée, caractérisé en ce que la partie d'entrée (1) de forme conique se termine à l'intérieur des demi-coquilles (2, 3) du carter ; et en ce que le cordon de soudure (12), orienté dans la direction périphérique, et servant à relier le tube-enveloppe (10) avec les demi-coquilles (2, 3), déborde vers l'intérieur.

4. Dispositif selon la revendication 1, 2 ou 3, caractérisé en ce qu'il est prévu à l'intérieur de la partie d'entrée (1) un cône déflecteur perforé (6) ayant une conicité orientée en sens opposé à celle de la partie d'entrée (1).

5. Procédé de fabrication d'un dispositif d'épuration de gaz d'échappement selon une des revendications 1 à 4, caractérisé en ce qu'une matrice métallique support (4) est mise en place, avec le tube-enveloppe (10) pourvu d'une gaine isolante (5), dans une demi-coquille (2, 3) du carter, ensuite une seconde demi-coquille (3, 2) est mise en place et est soudée avec la première demi-coquille le long de la ligne de séparation entre les demi-coquilles (2, 3) ; et en ce qu'ensuite, avant ou en même temps que la mise en place d'une partie d'entrée (1) comportant le raccord d'admission du gaz d'échappement, une soudure périphérique est effectuée pour relier le côté frontal du tube-enveloppe (10) de la matrice métallique support (4) avec les demi-coquilles soudées (2, 3) et le cas échéant avec la partie d'entrée (1).

# FIG. 1

0 177 479

# FIG. 2

# FIG. 3

FIG. 4

FIG. 5